# EUROPÄISCHE PATENTSCHRIFT

(11) **EP 1 046 824 B1**
(45) Veröffentlichungstag und Bekanntmachung des Hinweises auf die Patenterteilung: **19.11.2003**
(21) Anmeldenummer: 00104898.2
(22) Anmeldetag: 08.03.2000
(51) Int. Cl.: F16B 12/46

(54) **Eckverbindung an einem Möbelkorpus**
Corner assembly on a furniture unit
Assemblage d'angle sur un corps de meuble

(30) Priorität: 19.04.1999 DE 29906793 U
(43) Veröffentlichungstag der Anmeldung: 25.10.2000
(73) Patentinhaber: IMA Maschinenfabriken Klessmann GmbH, 32312 Lübbecke (DE)
(72) Erfinder: Ruffert, Klaus, 31832 Springe (DE)
(74) Vertreter: Elbertzhagen, Otto, Dipl.-Ing.

(56) Entgegenhaltungen:
- DE-A- 3 033 446
- DE-A- 19 739 394
- US-A- 5 255 965

## Beschreibung

Die Erfindung bezieht sich auf eine Eckverbindung an einen Möbelkorpus bildenden Platten, von denen jeweils die erste Platte an die zweite Platte unter Ausbildung einer Fuge mit zumindest einem zur Ebene der zweiten Platte parallelen Fugenabschnitt stumpf angesetzt ist und die an der Korpusfrontseite flächenbündig aneinander anschließende Schmalflächenseiten haben, welche je eine in ihrer Längsrichtung sich erstreckende Nut zur Aufnahme des Befestigungssteges eines Dichtwulstes oder eines Kantenstreifens mit Dichtwulst aufweisen.

Solche Eckverbindungen werden in der Regel an Möbelkorpussen vorgesehen, die in der Grundform, also im Vertikalschnitt gesehen, rechteckförmig sind. Hierbei stoßen die den Möbelkorpus bildenden Platten eckseitig unter einem Winkel von 90 Grad aneinander, wobei in bekannter Ausführung die eine Platte an die andere Platte stumpf angesetzt ist. Entsprechend bildet sich hier eine Stoßfuge aus, die in einer zu einer der beiden Platten parallelen Ebene liegt. Als Stoßfläche dient hierbei zum einen eine der Schmalflächenseiten der ersten Platte und der Randbereich der Innenseite der jeweils anderen Platte. Bevorzugt werden derartig gebildete Korpusse bei streng geometrisch gestalteten Kastenmöbeln eingesetzt, wie insbesondere bei Küchenund bei Büromöbeln.

Bei Möbeln dieser Art werden die Korpusse meist durch eine Tür oder Klappe verschlossen, zu deren Anlage an den frontseitigen Schmalflächenseiten des Möbelkorpus ein vorstehender Dichtwulst eingelassen oder ein Kantenstreifen mit einem vorstehenden Dichtwulst auf die in der Ebene der Korpusfront liegenden Schmalflächenseiten der Platten aufgesetzt ist. In beiden Fällen schneidet man in die frontseitigen Schmalflächenseiten der den Möbelkorpus bildenden Platten eine mit der Plattenebene jeweils parallele Nut ein, in welcher der Dichtwulst oder der mit einem Dichtwulst versehene Kantenstreifen mittels eines Befestigungssteges gesichert werden kann. Bei den im Bereich der Eckverbindung mit ihren Schmalflächenseiten einliegend angeordneten Platten kann diese Nut bis zu den beidendigen Schmalflächenseiten hin durchlaufend angeordnet werden, hingegen muß bei den aufliegenden Platten die Nut an beiden Enden vor den betreffenden Schmalflächenseiten enden, damit sie an diesen außenliegenden Schmalflächenseiten nicht störend beim fertigen Möbelkorpus in Erscheinung tritt. Das bedingt bei den letztgenannten Platten einen besonderen Fertigungsaufwand. Die Dichtwülste bestehen aus einem gummielastischen Material und sollen nicht nur das Eindringen von Staub oder dergl. in das Korpusinnere verhindern, sondern auch den Aufschlag der schließenden Korpustüren oder - klappen dämpfen, was zu einer Geräuschminderung beiträgt. Sowohl ein funktioneller als auch ein optisch störender Nachteil in der Anordnung der Dichtwülste bei den bekannten Eckverbindungen an Möbelkorpussen liegt darin, daß die Nut an den Schmalflächenseiten der jeweils außenliegenden Platten im Eckbereich einen Abstand zu der Nut der jeweils innenliegenden Platten hat, und dadurch ist im Bereich der Korpusecken eine Lücke bedingt, die zwischen den Enden des Dichtwulstes der jeweils innenliegenden Platte und dem Dichtwulst der außenliegenden Platte besteht.

Andererseits sind bei Möbelkorpussen sogenannte Gehrungs-Eckverbindungen zwischen den aneinander anliegenden Platten bekannt, bei denen die Gehrungsflächen jeweils von der Korpusinnenecke bis zur Korpusaußenecke durchgehend eben verlaufen. Deshalb verläuft bei Eckverbindungen dieser Art die Stoßfuge entlang der Eckkanten der Außenecken des Möbelkorpus. Entsprechend müssen die Kanten der miteinander zu verbindenden Platten, die in zusammengefügter Anordnung an den Außenecken des Möbelkorpus liegen, spitzwinklig ausgeführt werden. Bei den insbesondere für Küchen- und für Büromöbel üblichen Möbelplatten, die aus einem Spanplattenmaterial mit melaminharzgebundenen Deckschichten bestehen, sind solche spitzwinkligen Kanten unvorteilhaft, weil das Plattenmaterial bei der entsprechenden spangebenden Bearbeitung dazu neigt auszureißen, wodurch sich ein unsauberer Kantenverlauf ergibt. Gerade deshalb ist es wichtig, bei Möbelkorpussen für Möbel der genannten Art die Platten zumindest außenseitig stumpf aneinander anzuschließen, wie es der eingangs zitierten Eckverbindung mit den geschilderten Nachteilen hinsichtlich der Anordnung der Dichtwülste entspricht.

Die Druckschrift DE-A-197 39 394 zeigt eine Eckverbindung ohne Dichtwülste.

Der Erfindung liegt nun die Aufgabe zugrunde, eine Eckverbindung der gattungsgemäßen Art zu schaffen, bei der trotz der außenseitig stumpf aneinanderstoßenden Platten die Nuten an den frontseitigen Schmalflächenseiten so angeordnet sind, daß die Dichtwülste oder die Kantenstreifen mit den Dichtwülsten, die in diesen Nuten mit ihren Befestigungsstegen einzusetzen sind, über Eck lückenlos aneinander anschließen.

Diese Aufgabe wird bei einer Eckverbindung der gattungsbildenden Art nach der Erfindung dadurch gelöst, daß die Fuge zwischen den beiden Platten einen weiteren Fugenabschnitt aufweist, in welchem die Platten mit Gehrungsflächen aneinander anliegen und über den hinweg die Nuten an den frontseitigen Schmalflächenseiten der Platten aneinander anschließen.

Für die erfindungsgemäße Eckverbindung ist wesentlich, daß die stirnseitigen Öffnungen der Nuten in den frontseitigen Schmalflächenseiten der Platten an deren Gehrungsflächen so angeordnet sind, daß sie bei zusammengefügten Platten dekkungsgleich aufeinanderliegen. Die bis zum Ende dieser Nuten verlaufenden Dichtwulste, ganz gleich, ob sie mit einem eigenen Befestigungssteg oder mit dem Befestigungssteg eines Kantenstreifens in der jeweiligen Nut befestigt sind, schließen deshalb über Eck lückenlos aneinander an, was sowohl für die Dichtfunktion als auch für die Ästhetik vorteilhaft ist. Wenn auch die Platten im Bereich der über Eck miteinander zu verbindenden Kanten bearbeitet werden müssen, ergibt sich jedoch auch hier der weitere Vorzug, daß die jeweils bis zu den Gehrungsflächen hin sich erstreckenden Nuten durchlaufend eingeschnitten werden können, also nicht die Notwendigkeit besteht, eine solche Nut vor dem jeweiligen Randbereich der Platte enden zu lassen.

Damit nach außen hin der stumpfe Stoß zwischen den über Eck zu verbindenden Platten bestehen bleibt, werden die Gehrungsflächen entlang der Plattenränder und damit der zwischen diesen Gehrungsflächen liegende Fugenabschnitt jeweils zur Innenecke hin angeordnet. Um für die darin einmündenden Nuten die Gehrungsflächen der Platten ausreichend breit machen zu können, ist es zweckmäßig, wenn der zur Ebene der zweiten Platte parallele Fugenabschnitt und der Fugenabschnitt zwischen den Gehrungsflächen der Platten gleich lang sind. Wenn wie im Regelfall die Platten unter einem Winkel von 90 Grad aneinander anschließen, läßt man vorzugsweise den Fugenabschnitt zwischen den Gehrungsflächen der Platten unter einem Winkel von 45 Grad zu den Plattenebenen verlaufen. Grundsätzlich kann auch ein anderer Gehrungswinkel vorgesehen werden, ohne daß hiervon das unmittelbare Aneinanderschließen der Nuten in den frontseitigen Schmalflächenseiten der Platten beeinträchtigt wäre. Man kann die erwähnten Nuten sowohl unter dem Winkel aneinander anschließen lassen, der sich zwischen den miteinander verbundenen Platten ergibt als auch die Nuten geradlinig oder tangential fluchtend ineinander übergehen lassen. Im letzteren Fall ist es erforderlich, die Nuten an ihren Enden zu krümmen, wobei der Anschluß der Nuten aneinander über die erfindungsgemäßen Gehrungsflächen der Platten besonders große Krümmungsradien ermöglicht.

Die Erfindung wird nachfolgend anhand der Zeichnung an Ausführungsbeispielen noch näher erläutert. Dabei zeigen:
- Fig. 1: die schematische Frontansicht zweier Plattenenden, die für eine Verbindung über Eck vorbereitet sind,
- Fig. 2: in gleicher Ansicht die übereck miteinander verbundenen Platten gemäß Figur 1 und
- Fig. 3: eine der Figur 2 entsprechende Ansicht einer Platteneckverbindung in anderer Ausführung.

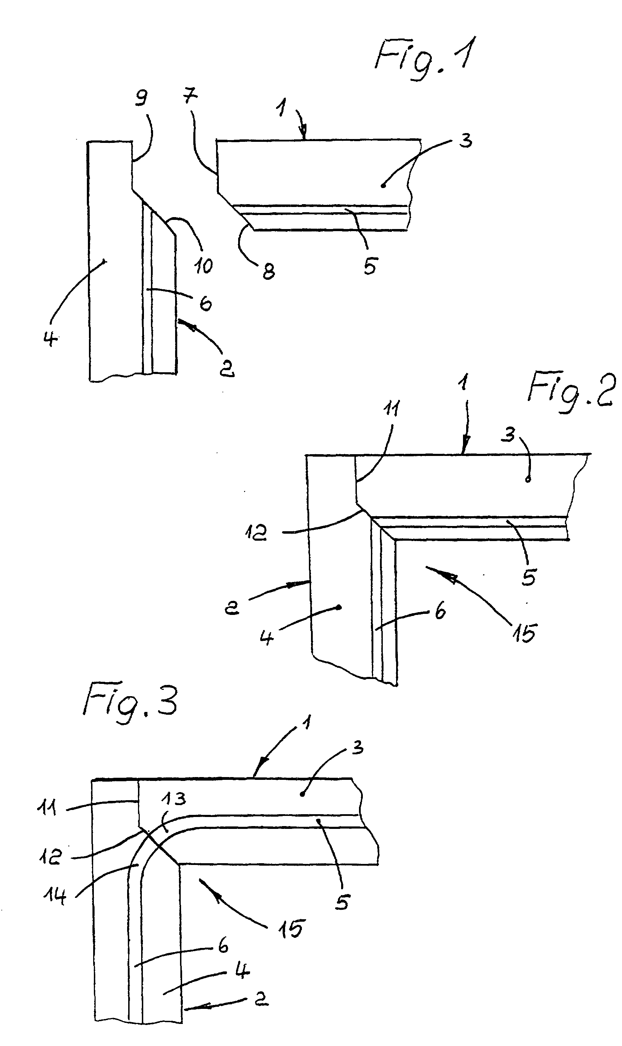

Im einzelnen zeigt Figur 1 die Endabschnitte einer ersten Platte 1 und einer zweiten Platte 2 mit ihren frontseitigen Schmalflächenseiten 3 und 4, die entsprechend der gewählten Darstellung über Eck unter einem Winkel von 90 Grad miteinander verbunden werden sollen. Parallel zu den inneren und den äußeren Seiten der Platten 1 und 2 ist in die Schmalflächenseiten 3 und 4 jeweils eine Nut 5 und 6 eingeschnitten, die zur Aufnahme des Befestigungssteges eines nicht dargestellten Dichtwulstes oder eines Kantenstreifens mit einem solchen Dichtwulst vorgesehen ist. Wenn auch der Dichtwulst bzw. der Kantenstreifen in der Zeichnung nicht dargestellt ist, kann man sich den Verlauf des Dichtwulstes jedoch ohne weiteres vorstellen, da er mit dem Verlauf der Nuten 5 und 6 an den Schmalflächenseiten 3 und 4 der Platten 1 und 2 in aller Regel identisch ist.

Die Platte 1 hat eine rechtwinklig zur Innen- und Außenseite vorlaufende Stirnseitenfläche 7, die ebenfalls zur Schmalflächenseite 3 rechtwinklig ist. Daran schließt zur Innenseite hin eine Gehrungsfläche 8 an, die unter einem Winkel von 45 Grad zu den großflächigen Plattenseiten angeordnet ist. Im Bereich dieser Gehrungsfläche 8 läuft die Nut 5 bei der Platte 1 aus, hier findet sich also die stirnseitige Öffnung der Nut 5.

Die Platte 2 hat das der Platte 1 im Endbereich entsprechende Negativprofil, mit einer Stoßfläche 9, die parallel zu der Innenseite und der Außenseite der Platte 2 angeordnet ist. Daran schließt zur Innenseite der Platte 2 hin ebenfalls eine Gehrungsfläche 10 an, die unter einem Winkel von 45 Grad zu der großflächigen Außenseite und der Innenseite der Platte 2 steht. In gleicher Weise wie bei der Platte 1 läuft auch bei der Platte 2 die dort vorhandene Nut 6 an der Schmalflächenseite 4 mit ihrer stirnendigen Öffnung in die Gehrungsfläche 10 aus.

In zusammengefügter Anordnung, welche Figur 2 wiedergibt, liegen die Gehrungsflächen 8 und 10 der beiden Platten 1 und 2 ebenso wie die Stirnseitenfläche 7 und die Stoßfläche 9 aneinander an und bilden eine Fuge mit einem ersten Fugenabschnitt 11 und einem zweiten, abgewinkelten Fugenabschnitt 12. Der erste Fugenabschnitt 11 liegt parallel zu der Ebene der zweiten Platte 2, hingegen verläuft der zweite Fugenabschnitt 12 unter einem Winkel von 45 Grad zu den Ebenen beider Platten 1 und 2. Im Bereich der Gehrungsflächen 8 und 10 der beiden Platten 1 und 2 gehen die Nuten 5 und 6 unmittelbar ineinander über, ihren stirnendigen Öffnungen liegen deckungsgleich aufeinander. Entsprechend schließen die in den Nuten 5 und 6 befestigten Dichtwülste der beiden Platten 1 und 2, die jeweils bis zu den Enden der Nuten 5 und 6 verlaufen, unmittelbar ohne Lücke über Eck aneinander an. Im Bereich der Außenecke sind die Platten 1 und 2 nach wie vor stumpf aneinander angestoßen, zur Innenecke 15 hin erstreckt sich der zwischen den Gehrungsflächen 8 und 10 der Platten 1 und 2 verlaufende, schräge Fugenabschnitt 12. Im Bereich der Gehrungsflächen 8 und 10 (Fig. 1) sind die Platten 1 und 2 stumpfwinklig angeschnitten, was auch bei Spanplattenmaterial mit einer kunstharzgebundenen Deckschicht kein Problem darstellt.

Figur 3 gibt eine Eckverbindung wieder, bei der in gleicher Weise wie bei der Ausführung nach den Figuren 1 und 2 die beiden aneinander anschließenden Platten 1 und 2 Gehrungsflächen 8 und 10 haben. Jedoch gehen die an den Schmalseiten 3 und 4 angeordneten Nuten 5 hier im Bereich ihrer Öffnungen tangential fluchtend ineinander über, entsprechend weisen sie zu ihren Enden hin Krümmungen 13 und 14 auf, die symmetrisch zu dem Fugenabschnitt 12 zwischen den Gehrungsflächen 8 und 10 der Platten 1 und 2 verlaufen.

## Patentansprüche

1. Eckverbindung an einen Möbelkorpus bildenden Platten (1, 2), von denen jeweils die erste Platte (1) an die zweite Platte (2) unter Ausbildung einer Fuge mit zumindest einem zur Ebene der zweiten Platte (2) parallelen Fugenabschnitt (11) stumpf angesetzt ist und die an der Korpusfrontseite flächenbündig aneinander anschließende Schmalflächenseiten (3, 4) haben, welche je eine in ihrer Längsrichtung sich erstrekkende Nut (5, 6) zur Aufnahme des Befestigungssteges eines Dichtwulstes oder eines Kantenstreifens mit Dichtwulst aufweisen,
**dadurch gekennzeichnet,**
**daß** die Fuge zwischen den beiden Platten (1, 2) einen weiteren Fugenabschnitt (12) aufweist, in welchem die Platten (1, 2) mit Gehrungsflächen (8, 10) aneinander anliegen und über den hinweg die Nuten (5, 6) an den frontseitigen Schmalflächenseiten (3, 4) der Platten (1, 2) aneinander anschließen.

2. Eckverbindung nach Anspruch 1,
**dadurch gekennzeichnet,**
**daß** der weitere Fugenabschnitt (12) und entsprechend die Gehrungsflächen (8, 10) zur Innenecke (15) zwischen den Platten (1, 2) hin angeordnet ist.

3. Eckverbindung nach Anspruch 1 oder 2,
**dadurch gekennzeichnet,**
**daß** der zur Ebene der zweiten Platte (2) parallele Fugenabschnitt (11) und der Fugenabschnitt (12) zwischen den Gehrungsflächen (8, 10) der Platten (1, 2) gleich lang sind.

4. Eckverbindung nach einem der Ansprüche 1 bis 3,
**dadurch gekennzeichnet,**
**daß** die Platten (1, 2) unter einem Winkel von 90 Grad aneinander anschließen und der Fugenabschnitt (12) zwischen den Gehrungsflächen (8, 10) der Platten (1, 2) unter einem Winkel von 45 Grad zu den Ebenen der Platten (1, 2) verläuft.

5. Eckverbindung nach einem der Ansprüche 1 bis 4,
**dadurch gekennzeichnet,**
**daß** die Nuten (5, 6) unter einem Winkel entsprechend dem Winkel zwischen den Platten (1, 2) über Eck aneinander anschließen.

6. Eckverbindung nach einem der Ansprüche 1 bis 4,
**dadurch gekennzeichnet,**
**daß** die Nuten (5, 6) im Bereich des weiteren Fugenabschnittes (12) geradlinig oder tangential fluchtend ineinander übergehen.

## Claims

1. Corner assembly of panels (1, 2) forming a furniture carcase, of which panels the respective first panel (1) is set against the second panel (2) by an obtuse angle thereby forming a joint having at least one joint section (11) situated parallel to the plane of the second panel (2) and the panels having narrow faces (3, 4), flush with one another, on the front side of the furniture unit, each of which has a longitudinally extending groove (5, 6) for accepting the connecting web of a sealing bead or an edge strip with a sealing bead,
**characterised in that**,
the joint situated between the two panels (1, 2) has a further joint section (12) in which the panels (1, 2) abut each other by mitre-surfaces (8, 10) and in which the grooves (5, 6) adjoin each other across the narrow front faces (3, 4) of the panels (1, 2).

2. Corner assembly according to Claim 1,
**characterised in that**
the further joint section (12) and accordingly the mitre-surfaces (8, 10) are arranged towards the inner corner (15) between the panels (1, 2).

3. Corner assembly according to Claim 1 or 2,
**characterised in that**
the joint section (11) situated parallel to the plane of the second panel (2) and the joint section (12) between the mitre-surfaces (8, 10) of the panels (1, 2) have the same length.

4. Corner assembly according to one of the Claims 1 to 3,
**characterised in that**
the panels (1, 2) are attached to each other at an angle of 90 degrees and the joint section (12) between the mitre-surfaces (8, 10) of the panels (1, 2) is situated at an angle of 45 degrees to the planes of the panels (1, 2).

5. Corner assembly according to one of the Claims 1 to 4,
**characterised in that**
the grooves (5, 6) are connected to each other across the corner by an angle that corresponds to the angle between the panels (1, 2) .

6. Corner assembly according to one of the Claims 1 to 4,
**characterised in that**
in the area of the further joint section (12), the grooves (5, 6) run into each other aligned in a straight or a tangential manner

## Revendications

1. Assemblage d'angle sur des panneaux (1, 2) qui forment un corps de meuble, dont le premier panneau (1) est assemblé at deuxième panneau (2) avec au moins un secteur de jointure (10) parallèle au plan dudit deuxième panneau (2), et qui possèdent, sur le côté frontal dudit corps de meuble, des côtés à surface étroite (3, 4) portant l'un contre l'autre à surface plane, lesquels présentent chacun une rainure (5, 6) qui, s'étendant dans le sens de leur longueur, est destinée à recevoir les pattes de fixation d'un boudin d'étanchéité ou d'une bande de bordure pourvue d'un boudin d'étanchéité ,
**caractérisé en ce que**
la jointure entre les deux panneaux (1, 2) présente un autre secteur de jointure (12) dans lequel les panneaux portent l'un contre l'autre avec des surfaces en onglet (8, 10) et sur lequel les rainures (5, 6) aboutissent l'une à l'autre sur les côtés frontaux à surface étroite (3, 4) des panneaux (1, 2).

2. Assemblage d'angle selon la revendication 1,
**caractérisé en ce que**
l'autre secteur de jointure (12) et adéquatement les surfaces en onglet (8, 10) sont disposés, orientés vers l'angle intérieur (15), entre les panneaux 1, 2).

3. Assemblage d'angle selon la revendication 1 ou 2,
**caractérisé en ce que**
le secteur de jointure (11), parallèle au plan du deuxième panneau (2), et le secteur de jointure (12), situé entre les surfaces en onglet (8, 10) des panneaux (1, 2), sont de longueur égale.

4. Assemblage d'angle selon l'une des revendications 1 à 3,
**caractérisé en ce que**
les panneaux (1, 2) sont assemblés sous un angle de 90 degrés et le secteur de jointure (12), situé entre les surfaces en onglet (8, 10) des panneaux (1, 2), s'étend vers les plans des panneaux (1, 2) sous un angle de 45 degrés.

5. Assemblage selon l'une des revendications 1 à 4,
**caractérisé en ce que**
les rainures (5, 6) aboutissent l'une à l'autre en diagonale, en formant un angle qui correspond à l'angle formé entre les panneaux (1, 2).

6. Assemblage selon l'une des revendications 1 à 4,
**caractérisé en ce que**
les rainures (5, 6) aboutissent l'une à l'autre en ligne droite ou tangentiellement, dans l'autre secteur de jointure (12).
